# EUROPÄISCHE PATENTSCHRIFT

(11) **EP 3 415 346 B1**
(45) Veröffentlichungstag und Bekanntmachung des Hinweises auf die Patenterteilung: **07.06.2023**
(21) Anmeldenummer: 18184265.9
(22) Anmeldetag: 01.09.2015
(51) Int. Cl.: B60C 23/00, B60B 27/00

(54) **ANORDNUNG ZUR DRUCKLUFTVERSORGUNG EINES RADES EINES FAHRZEUGES**
ARRANGEMENT FOR COMPRESSED AIR SUPPLY OF A WHEEL OF A VEHICLE
DISPOSITIF D'ALIMENTATION EN AIR COMPRIMÉ D'UNE ROUE D'UN VÉHICULE

(30) Priorität: 01.10.2014 DE 102014219981; 01.10.2014 DE 102014219980; 01.10.2014 DE 102014219983
(43) Veröffentlichungstag der Anmeldung: 19.12.2018
(62) Teilanmeldung aus: 15756661.3
(73) Patentinhaber: Bayerische Motoren Werke Aktiengesellschaft, 80809 München (DE)
(72) Erfinder: Dudkowiak, Johann, 82343 Poecking (DE); Gielisch, Sebastian, 85716 Unterschleissheim (DE); Janek, Thomas, 80631 München (DE); Stürzl, Stefan, 85748 Garching (DE)

(56) Entgegenhaltungen:
- DE-A1-102011 006 123
- FR-A1- 2 731 655
- FR-A1- 2 896 725
- US-A- 4 932 451

## Beschreibung

Vorliegende Erfindung betrifft eine Anordnung und ein Verfahren zur Druckluftversorgung eines Rades eines Fahrzeuges, insbesondere eines Kraftfahrzeuges. Mittels der Anordnung ist der Reifendruck im Rad des Fahrzeuges während der Fahrt veränderbar.

Das Verändern des Reifendrucks in einem Fahrzeug kann sich sowohl positiv auf den Fahrkomfort als auch auf den Energieverbrauch auswirken. Ein entsprechend niedriger Reifendruck führt beispielsweise zu einer weichen Federung im Reifen und somit zu einer komfortableren Fahrt. Ein entsprechend hoher Reifendruck reduziert den Rollwiderstand. Dies wiederum reduziert den Energieverbrauch des Fahrzeuges und verbessert dadurch die CO2-Bilanz. Problematisch bei der Konstruktion der Druckluftversorgung ist stets die Druckluftführung von der Druckluftquelle im Fahrzeug bis hin zu dem rotierenden Rad. Die Druckschrift US2008/0006357A1 zeigt hierzu eine beispielhafte Lösung. Dabei wird die Luft durch entsprechende Bohrungen und Leitungen in der Radaufhängung geführt. Jedoch sollte auf solche Bohrungen soweit als möglich verzichtet werden, da jede Bohrung stets zum Nachteil hat, dass sie aufwendig in der Fertigung ist und das entsprechende Bauteil schwächt.

Die FR 273 16 55 A1 zeigt eine Druckluftversorgung eines Reifens wobei der Reifen mit einer Druckquelle, einem Vakuum und einer Entlüftung durch ein Ventil verbunden ist. Die Abtriebswelle ist dabei mittels einer Keilwellenverbindung mit einem Radlager verbunden, wobei die Verzahnung der Keilwellenverbindung als Druckluftführung genutzt wird.

Die US 4 932 451 zeigt ebenfalls eine Druckluftversorgung eines Reifens eines Fahrzeuges, wobei das Radlager mittels einer Keilwellenverbindung mit der Abtriebswelle verbunden ist.

Ebenfalls sind die FR 2 896 725 A1 sowie die DE 10 2011 006 123 A1 als Stand der Technik auf dem Gebiet der Druckluftversorgung eines Reifens zu nennen.

Es ist Aufgabe vorliegender Erfindung eine Anordnung zu Druckluftversorgung eines Rades eines Fahrzeuges anzugeben, die bei kostengünstiger Herstellung und Montage einen sicheren und dauerfesten Betrieb sowohl des Fahrzeuges als auch der Druckluftversorgung ermöglicht. Ferner ist es Aufgabe vorliegender Erfindung ein entsprechendes Verfahren zur Reifenfülldruckregelung des Rades anzugeben.

Die Lösung der Aufgabe erfolgt durch die Merkmale der unabhängigen Ansprüche. Die abhängigen Ansprüche haben vorteilhafte Ausgestaltungen der Erfindung zum Gegenstand.

Somit wird die Aufgabe gelöst durch eine Anordnung zur Druckluftversorgung eines Rades eines Fahrzeuges. Die Anordnung umfasst dabei ein Rad mit Reifen sowie eine Abtriebswelle. Die Abtriebswelle dient zur Drehmomentübertragung auf das Rad. Dementsprechend führt die Abtriebswelle vom Motor des Fahrzeuges über etwaige Getriebe bis zur Radaufhängung.

Auf einem Radlager der Anordnung ist das Rad drehfest montiert. Zwischen der Abtriebswelle und dem Radlager ist eine Verzahnung vorgesehen, wobei die Verzahnung nicht als Keilwellenverbindung ausgestaltet ist. Diese Verzahnung dient zur Drehmomentübertragung von der Abtriebswelle auf das Radlager. Das Radlager ist mittels einer Schraube mit der Abtriebswelle verspannt. Diese Schraube erstreckt sich koaxial zur Abtriebswelle in einem inneren Hohlraum des Radlagers. In diesem Hohlraum, radial außerhalb der Schraube, ist ein sogenannter Radlagerringraum definiert. Bevorzugt ist zumindest ein Druckluftdurchlass von diesem Radlagerringraum in Richtung des Rades vorgesehen. Des Weiteren umfasst die Anordnung eine Druckluftführung. Diese führt von einer fahrzeugseitigen Druckluftquelle in den Radlagerringraum und vom Radlagerringraum durch den zumindest einen bevorzugten Druckluftdurchlass bis zum Rad. Im Rad kann die Druckluft radial nach außen, beispielsweise durch die Speichen, bis zur Felge und in den Reifen geführt werden. Bevorzugt ist also vorgesehen, den Radlagerringraum bei der Druckluftführung zu nutzen. Dementsprechend ist bevorzugt zumindest der eine Druckluftdurchlass vorgesehen, um die in den Radlagerringraum eingebrachte Druckluft weiter in Richtung des Rades zu leiten.

In vorteilhafter Ausführung ist vorgesehen, dass ein Schraubenkopf der Schraube an einer Auflagefläche am Radlager anliegt. Der zumindest eine Druckluftdurchlass ist im Bereich der Auflagefläche und/oder im Radlager und/oder in der Schraube ausgebildet. Um die Druckluft aus dem Radlagerringraum weiter in Richtung des Rades zu leiten, muss die Druckluft durch die Auflagefläche oder nahe der Auflagefläche (also im Radlager) oder durch die Schraube hindurch geführt werden.

Im Folgenden werden unterschiedliche Ausgestaltungen des zumindest einen Druckluftdurchlasses beschrieben. Dabei versteht sich stets, dass auch mehrere der Druckluftdurchlässe in der einen Anordnung ausgebildet werden können. Dabei ist es auch möglich, dass die mehrere Druckluftdurchlässe unterschiedlich ausgestaltet sind. So kann es beispielsweise einen Druckluftdurchlass als Nut und einen anderen Druckluftdurchlass als Kanal geben.

Bevorzugt ist vorgesehen, dass der Druckluftdurchlass durch eine Nut im Radlager an der Auflagefläche und/oder durch eine Nut im Schraubenkopf an der Auflagefläche gebildet ist. Durch solch eine Nut an der Auflagefläche wird sichergestellt, dass der Schraubenkopf an der Auflagefläche den Radlagerringraum nicht vollständig abdichtet, sondern die Druckluft durch die Nut hindurch weiter in Richtung des Rades geführt werden kann.

Des Weiteren ist bevorzugt vorgesehen, den Druckluftdurchlass durch einen Kanal im Radlager und/oder durch einen Kanal im Schraubenkopf zu bilden. Der Kanal wird dabei vorzugsweise als Bohrung ausgebildet. Alternativ dazu ist es auch möglich, beispielsweise beim Guss des Radlagers ein entsprechendes Röhrchen einzulegen und zu umspritzen. Die Kanäle werden möglichst kurz ausgebildet und führen lediglich um die Auflagefläche herum, sodass eine Schwächung der entsprechenden Bauteile weitestmöglich vermieden wird. Es kann dabei ein Kanal gestaltet werden, der lediglich durch den Schraubenkopf hindurchgeht. Alternativ oder zusätzlich dazu kann ein erster Kanal sich entlang der Mittelachse der Schraube erstrecken. Ein radial gerichteter seitlicher Kanal trifft auf diesen ersten Kanal. Vorzugsweise erstreckt sich der radial gerichtete Kanal durch die gesamte Schraube und ist dadurch einfach zu fertigen.

Des Weiteren ist bevorzugt vorgesehen, an der Auflagefläche eine Unterlegscheibe anzuordnen. In dieser Unterlegscheibe wird zumindest eine Nut oder eine Bohrung oder eine entsprechende Aussparung ausgebildet. Die Druckluft kann dadurch durch die Nut, Bohrung oder Aussparung in der Unterlegscheibe aus dem Radlagerringraum in Richtung des Rades weitergeleitet werden.

Anstatt der Unterlegscheibe kann auch ein Federring an der Auflagefläche angeordnet werden. Die entsprechende Wellenform des Federrings ermöglicht dabei die Ausbildung eines Druckluftdurchlasses. Selbstverständlich wird dabei die Schraube nicht soweit angezogen, dass der Federring über seine gesamte Fläche voll anliegt und abdichtet.

Die Unterlegscheibe oder der Federring können auch als nicht-geschlossener Ring, z. B. in C-Form, ausgebildet sein, wobei der offene Anteil die Aussparung für die Druckluft bildet.

Des Weiteren ist bevorzugt vorgesehen, zur Ausbildung des Druckluftdurchlasses ein luftdurchlässiges, beispielsweise poröses, Material zu verwenden. Dieses luftdurchlässige Material wird als Teil des Radlagers und/oder als zumindest ein Teil der Schraube oder als zumindest ein Teil der Unterlegscheibe verwendet. Vorzugsweise wird für das luftdurchlässige Material Sintermetall, Metallschaum oder poröser PTFE-Schaum (Polytetrafluorethylen) verwendet. Auch das unter dem Handelsnamen Metapor bekannte Material kann hier als luftdurchlässiges Material eingesetzt werden.

Wie bereits eingangs beschrieben, ist die Abtriebswelle über eine Verzahnung mit dem Radlager verbunden. Es wurde erkannt, dass die Druckluftführung in den Radlagerringraum durch diese Verzahnung hindurch erfolgen kann, selbst bei Ausgestaltung der Verzahnung als Keilwellenverbindung. Solch eine Verzahnung, selbst in spielfreier Ausführung, weist stets Freiräume auf. Die Keilwellenverbindung wird hier auch allgemein als Verzahnung betrachtet, da die Keilwellenverbindung ebenfalls Freiräume an den Keilen (=Zähne) aufweist.

Die Freiräume befinden sich zwischen den Köpfen der Zähne und den gegenüberliegenden Tälern zwischen den Zähnen. Des Weiteren gibt es selbst bei der spielfreien Ausführung aufgrund der evolventen Form der Zähne Freiräume zwischen den aneinander anliegenden Flanken. So führt die beschriebene Druckluftführung vorteilhafterweise von der fahrzeugseitigen Druckluftquelle durch die Verzahnung hindurch in den Radlagerringraum. Ohne Veränderung vorhandener Bauteile kann somit die Führung der Druckluft von den nicht rotierenden Anteilen des Fahrzeuges in die rotierenden Anteile geführt werden. Der Radlagerringraum grenzt radseitig an die Verzahnung. Deshalb ist insbesondere bei Durchleiten der Druckluft durch die Verzahnung die beschriebene bevorzugte Ausbildung des Druckluftdurchlasses vom Radlagerringraum in Richtung des Rades vorteilhaft anwendbar.

So führt bevorzugt die Druckluftführung von der fahrzeugseitigen Druckluftquelle zu einem ersten Ringraum. Dieser erste Ringraum schließt sich direkt an die Verzahnung an, sodass über den ersten Ringraum die Druckluft durch die Freiräume zwischen den Zähnen der Verzahnung geleitet werden kann. Auf der anderen Seite der Verzahnung befindet sich der Radlagerringraum (auch: zweiter Ringraum). Von diesem Radlagerringraum erfolgt die Druckluftführung bis zum Rad und über das Rad in den Reifen. Die beiden Ringräume, in Strömungsrichtung vor und hinter der Verzahnung, sorgen dafür, dass die Druckluft über sämtliche Freiräume der Verzahnung geleitet wird. Die Summe aller Freiräume der Verzahnung bildet einen ausreichend großen Querschnitt für die Druckluftführung.

Des Weiteren ist vorzugsweise ein am Fahrzeug, insbesondere über Fahrwerkslenker, befestigbarer Radträger vorgesehen. Der Radträger kann beispielsweise als Schwenklager ausgebildet sein. Das Radlager ist drehbar gegenüber dem Radträger montiert. Beispielsweise befindet sich zwischen Radlager und Radträger ein Wälzlager.

In oder am Radträger ist vorteilhafterweise eine Druckluftleitung vorgesehen. Diese Druckluftleitung führt bis zum ersten Ringraum. Die Druckluftleitung kann dabei zumindest stellenweise im Inneren des Radträgers ausgebildet sein. Versorgt wird die Druckluftleitung von der Druckluftquelle im Fahrzeug. Dabei ist insbesondere auch vorgesehen, dass eine Druckluftquelle für mehrere Räder des Fahrzeugs genutzt wird.

Der erste Ringraum ist vorteilhafterweise gebildet durch zumindest einen nicht-drehenden Anteil der Anordnung und zumindest einen drehenden Anteil der Anordnung. Der nicht-drehende Anteil der Anordnung ist vorteilhafterweise der Radträger. Den drehenden Anteil der Anordnung bildet in diesem Bereich insbesondere die Abtriebswelle und/oder das Radlager. Ferner kann der mit dem Radlager fest verbundene Innenring des Wälzlagers ebenfalls den ersten Ringraum begrenzen. Vorteilhafterweise grenzt der erste Ringraum direkt an die beschriebene Verzahnung, sodass sich über den ersten Ringraum die Druckluft unmittelbar auf sämtliche Freiräume der Verzahnung verteilt. Zwischen dem nicht-drehenden Anteil und dem drehenden Anteil befindet sich bevorzugt eine Dichtungsanordnung. Diese Dichtungsanordnung dichtet den ersten Ringraum gegenüber der Umgebung ab.

Die Dichtungsanordnung umfasst vorteilhafterweise zumindest eine Dichtlippe. Diese Dichtlippe ist derart gestaltet, sodass sie bei entsprechend niedrigem Druck im ersten Ringraum den ersten Ringraum nicht abdichtet. Dadurch, dass sie in diesem Zustand nicht abdichtet, schleift die Dichtlippe auch nicht und unterliegt somit nicht dem Verschleiß. Erst bei entsprechend großem Druck im ersten Ringraum wird die Dichtlippe durch den Druck bewegt und dichtet dabei ab.

Des Weiteren ist bevorzugt ein Steuerventil vorgesehen, das stromab des Druckluftdurchlasses, vorzugsweise im Nabenbereich des Rades oder im Radlager angeordnet ist. So strömt die Druckluft nach dem Druckluftdurchlass vorteilhafterweise in das Steuerventil. Nach dem Steuerventil wird die Druckluft durch die Speichen und die Felge hindurch in den Reifen geführt. Vorteilhafterweise ist das Steuerventil als pneumatisches Steuerventil ausgebildet, wobei die Druckluft nicht nur zum Befüllen des Reifens, sondern auch zur Ansteuerung des Steuerventils verwendet wird.

Die Erfindung umfasst ferner ein Verfahren zur Reifenfülldruckregelung des Fahrzeuges, insbesondere Kraftfahrzeuges, umfassend die folgenden Schritte: (i) Bereitstellen einer Druckluftführung vom Fahrzeug in den Reifen, wobei der Reifen mit dem Luftdruck aus dieser Druckluftführung befüllbar ist. Die Druckluftführung kann durch separate Kanäle und Leitungen gestaltet werden. Ferner ist es auch möglich, bereits vorhandene Hohlräume für die Druckluftführung zu nutzen. Entscheidend ist, dass die Druckluftführung von der fahrzeugseitigen Druckluftquelle bis in den Reifen führt. Im Folgenden wird von "nicht-drehenden Anteilen" des Fahrzeuges und von "drehenden Anteilen" des Fahrzeuges gesprochen. Die drehenden Anteile des Fahrzeuges sind insbesondere das Radlager, das auf dem Radlager montierte Rad und der auf dem Rad montierte Reifen. Das Rad wiederum weist üblicherweise einen Nabenbereich, mehrere Speichen und die Felge auf.

Ferner umfasst das Verfahren ein (ii) Messen eines Ist-Drucks im Reifen mit einem Sensor. Der Sensor befindet sich dabei im drehenden Anteil des Fahrzeuges, also insbesondere im Radlager, im Rad oder im Reifen. (iii) Der gemessene Ist-Druck wird drahtlos an eine Steuereinheit übertragen. Die Steuereinheit befindet sich im nicht-drehenden Anteil des Fahrzeuges, beispielsweise innerhalb der Karosserie. In der Druckluftführung, zwischen der Druckluftquelle und dem Reifen, befindet sich ein Steuerventil. (iv) Es erfolgt ein Ansteuern dieses Steuerventils in Abhängigkeit des übertragenen Ist-Drucks. Dabei kann das Steuerventil in zumindest zwei Schaltstellungen gesteuert werden. Eine erste Schaltstellung dient zum Befüllen des Reifens mit Druckluft aus der Druckluftführung. Die zweite Schaltstellung dient zum Ablassen der Druckluft aus dem Reifen in die Umgebung.

Bevorzugt bedarf es aufgrund der drahtlosen Übertragung des gemessenen Ist-Drucks keiner kabelgebundenen Verbindung zwischen den drehenden Anteilen und den nicht drehenden Anteilen des Fahrzeuges. Ferner kann die Steuereinheit selbstständig den Ist-Druck im Reifen an einen gewünschten Soll-Druck anpassen. Dies erfolgt durch entsprechende Ansteuerung des Steuerventils in Abhängigkeit des Ist-Drucks. Das Festlegen des Soll-Drucks kann einerseits durch eine Vorgabe des Fahrers erfolgen, andererseits basierend auf Fahrzeugdaten errechnet werden. So kann beispielsweise darauf geschlossen werden, dass eine energiesparende Fahrweise angebracht ist. Dementsprechend wird der Soll-Druck erhöht. Bei der Anforderung an eine komfortablere Fahrt kann der Soll-Druck gesenkt werden, um so die Reifensteifigkeit zu senken.

Vorteilhafterweise ist vorgesehen, dass das Steuerventil pneumatisch ansteuerbar ist. Die Steuereinheit verändert dabei, in Abhängigkeit des übertragenen Ist-Drucks, den Druck in der Druckluftführung. Ein erster Druck in der Druckluftführung bewirkt dabei die erste Schaltstellung. Ein zweiter Druck bewirkt die zweite Schaltstellung. Es sind somit zumindest zwei Schaltstellungen vorgesehen.

Ferner ist vorteilhafterweise vorgesehen, dass sich das Steuerventil im drehenden Anteil des Fahrzeuges befindet. Insbesondere wird das Steuerventil im Nabenbereich des Rades oder im Radlager, bevorzugt zentrisch, angeordnet. Insbesondere bei der Anordnung des Steuerventils im drehenden Anteil des Fahrzeuges ist es von Vorteil, das Steuerventil pneumatisch anzusteuern. Infolgedessen bedarf es keiner daten- oder stromführenden Leitungen etwa für ein Magnetventil im drehenden Anteil. Es kann die ohnehin vorhandene Druckluftführung auch zur Signalübertragung und zur Ansteuerung des Steuerventils genutzt werden.

Insbesondere ist vorgesehen, dass der zweite Druck, zum Schalten in die zweite Schaltstellung höher ist als der erste Druck zum Schalten in die erste Schaltstellung. Die zweite Schaltstellung wird zum Ablassen des Luftdrucks aus dem Reifen verwendet. Durch diese Ausgestaltung ist sichergestellt, dass nur bei ausreichend hohen Energiereserven im Fahrzeug der Luftdruck aus dem Reifen abgelassen wird. Dadurch ist die Wahrscheinlichkeit relativ hoch, dass nach dem Ablassen auch ausreichend Energie beziehungsweise Leistung zum Wiederbefüllen des Reifens zur Verfügung steht.

Des Weiteren ist bevorzugt vorgesehen, dass im oder am Reifen nicht nur der Ist-Druck, sondern auch eine Temperatur gemessen wird. Auch diese Temperatur wird vorteilhafterweise drahtlos an die Steuereinheit übertragen. Dadurch kann die Steuereinheit beim Ansteuern des Steuerventils nicht nur den Ist-Druck, sondern auch die Temperatur berücksichtigen.

Offenbart ist ferner eine Anordnung zur Reifenfülldruckregelung eines Fahrzeuges. Die Anordnung umfasst eine im nicht-drehenden Anteil des Fahrzeuges angeordnete Druckluftquelle sowie eine Druckluftführung von der Druckluftquelle zum Reifen des Fahrzeuges. In der Druckluftführung ist ein Steuerventil angeordnet. Ferner umfasst die Anordnung eine Steuereinheit im nicht-drehenden Anteil des Fahrzeuges zum Ansteuern des Steuerventils. Ein Sensor befindet sich im drehenden Anteil des Fahrzeuges, insbesondere im Radlager, Rad oder Reifen. Der Sensor dient zur Bestimmung des Ist-Drucks im Reifen. Mittels einer Vorrichtung zur drahtlosen Signalübertragung wird dieser Ist-Druck an die Steuereinheit übertragen. Die Steuereinheit ist dazu ausgebildet, das Steuerventil in Abhängigkeit des drahtlos übertragenen Ist-Drucks in eine erste Schaltstellung zum Befüllen des Reifens und in eine zweite Schaltstellung zum Ablassen der Druckluft aus dem Reifen anzusteuern.

Die im Rahmen des erfindungsgemäßen Verfahrens zur Reifenfülldruckregelung des Fahrzeuges beschriebenen vorteilhaften Ausgestaltungen finden entsprechend Anwendung für die Anordnung zur Reifenfülldruckregelung eines Fahrzeuges Insbesondere ist auch bei der Anordnung vorgesehen, dass das Steuerventil pneumatisch ansteuerbar ist. Demgemäß ist die Steuereinheit dazu ausgebildet, den Druck in der Druckluftführung in Abhängigkeit des drahtlos übertragenen Ist-Drucks zu verändern.

Das Steuerventil befindet sich vorteilhafterweise im drehenden Anteil des Fahrzeuges. Insbesondere bei dieser Anordnung bietet sich die pneumatische Ansteuerung des Steuerventils an.

Der Luftdruck in der Druckluftführung wird gleichzeitig zum Ansteuern des Steuerventils und zum Befüllen des Reifens genutzt. Es gibt also nur eine Druckluftführung vom nicht-drehenden Anteil zum drehenden Anteil und somit in den Reifen.

Das Verfahren zur Reifenfülldruckregelung des Fahrzeuges und die hierzu beschriebenen Ausgestaltungen finden entsprechend Anwendung für die erfindungsgemäße Anordnung zur Druckluftversorgung eines Rades eines Fahrzeuges.

Die erfindungsgemäße Anordnung zur Druckluftversorgung eines Rades eines Fahrzeuges und die hierzu beschriebenen vorteilhaften Ausgestaltungen und Unteransprüche finden entsprechend Anwendung für das Verfahren zur Reifenfülldruckregelung des Fahrzeuges

Weitere Einzelheiten, Merkmale und Vorteile der Erfindung ergeben sich aus der nachfolgenden Beschreibung und den Figuren. Es zeigen:
- Figur 1: eine erfindungsgemäße Anordnung zu Druckluftversorgung gemäß einem Ausführungsbeispiel,
- Figur 2: den in Figur 1 gekennzeichneten Schnitt A-A,
- Figuren 3 bis 9: unterschiedliche Ausgestaltungen eines Druckluftdurchlasses der erfindungsgemäßen Anordnung gemäß dem Ausführungsbeispiel,
- Figur 10: den in Figur 1 gekennzeichneten Schnitt B-B,
- Figur 11: den in Figur 1 gekennzeichneten Schnitt C-C,
- Figur 12: eine Dichtungsanordnung der erfindungsgemäßen Anordnung gemäß dem Ausführungsbeispiel, und
- Figur 13: eine schematische Ansicht einer Anordnung zur Reifenfülldruckregelung eines Fahrzeuges gemäß einem weiteren Ausführungsbeispiel.

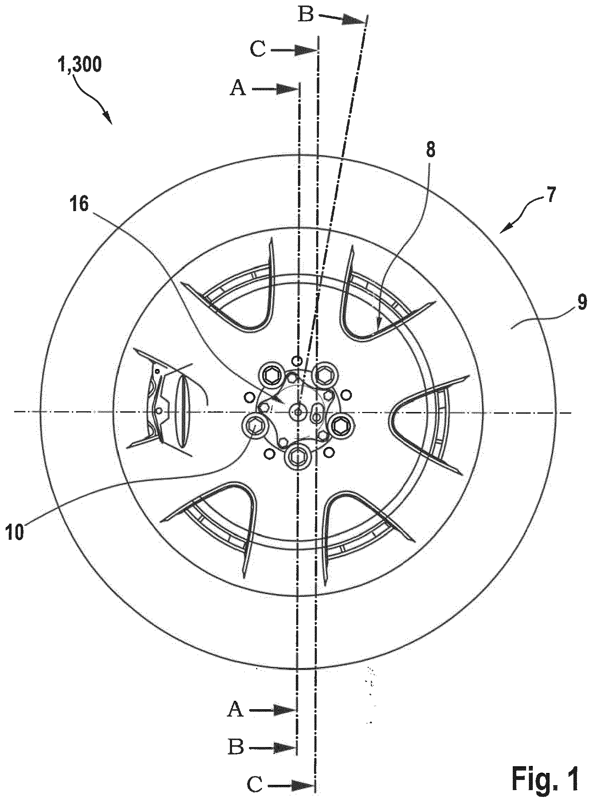

Im Folgenden wird anhand der Figuren 1 bis 12 eine erfindungsgemäße Anordnung 1 zur Druckluftversorgung eines Rades 7 im Detail beschrieben. Figur 1 zeigt das Rad 7 der Anordnung 1. Die Anordnung 1 ist Bestandteil eines Kraftfahrzeuges. Das Rad 7 befindet sich insbesondere an einer angetriebenen Achse des Kraftfahrzeuges mit Einzelradaufhängung, Verbundachse oder Starrachse.

Das Rad 7 umfasst eine Felge mehrere Speichen 8 und einen Nabenbereich. Auf der Felge ist ein Reifen 9 montiert. Das Rad 7 ist über Radschrauben 10 befestigt.

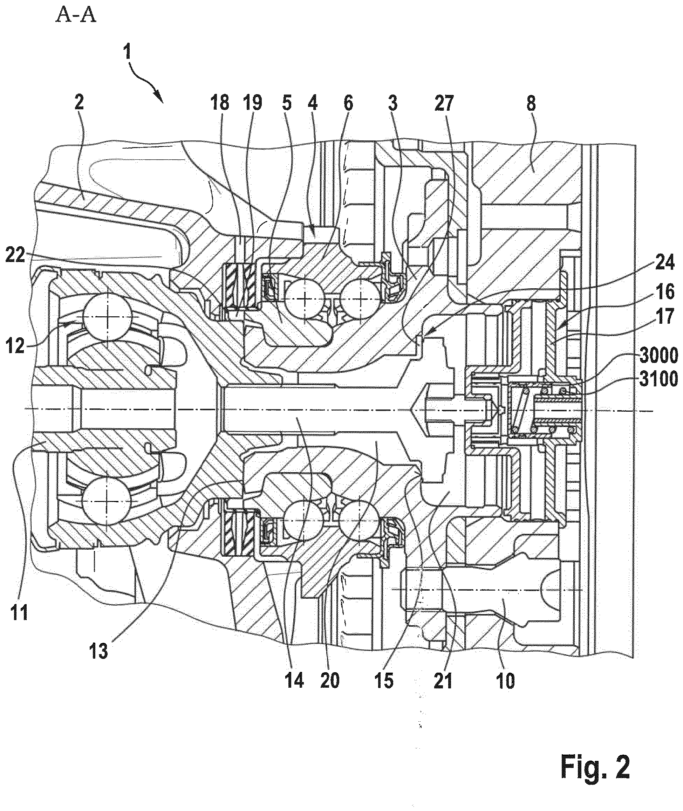

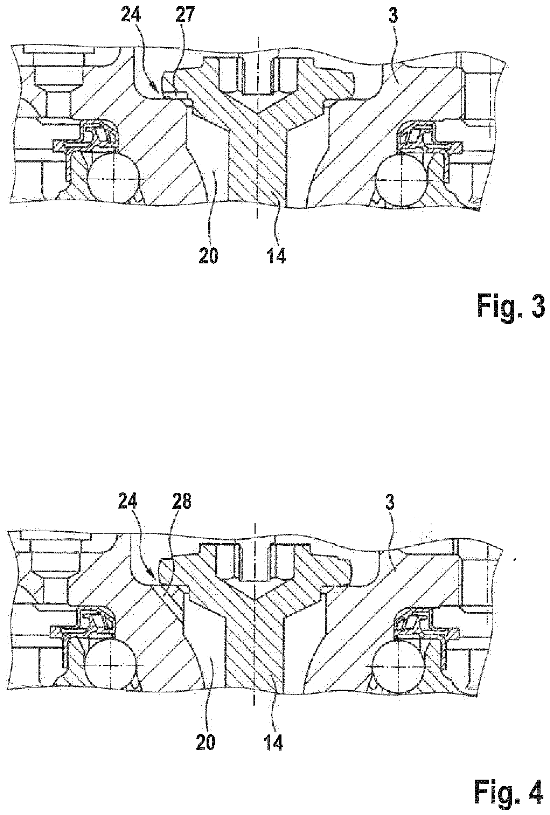

Figur 1 zeigt drei Schnittebenen A-A, B-B und C-C. Die Schnittansicht A-A ist in Figur 2 gezeigt. Die Figuren 3 bis 9 zeigen jeweils Details, ebenfalls in der Schnittebene A-A.

Figur 2 zeigt einen Ausschnitt eines Radträgers 2. Dieser Radträger 2 ist an seinem nicht dargestellten Ende, vorzugsweise über Fahrwerkslenker, mit der Karosserie oder einem Achsträger des Fahrzeuges verbunden. Ferner zeigt Figur 2 ein Radlager 3. Zwischen dem Radlager 3 und dem Radträger 2 ist ein Wälzlager 4 angeordnet. Ein Innenring 5 des Wälzlagers 4 ist fest mit dem Radlager 3 verbunden. Ein Außenring 6 des Wälzlagers 4 ist fest mit dem Radträger 2 verbunden.

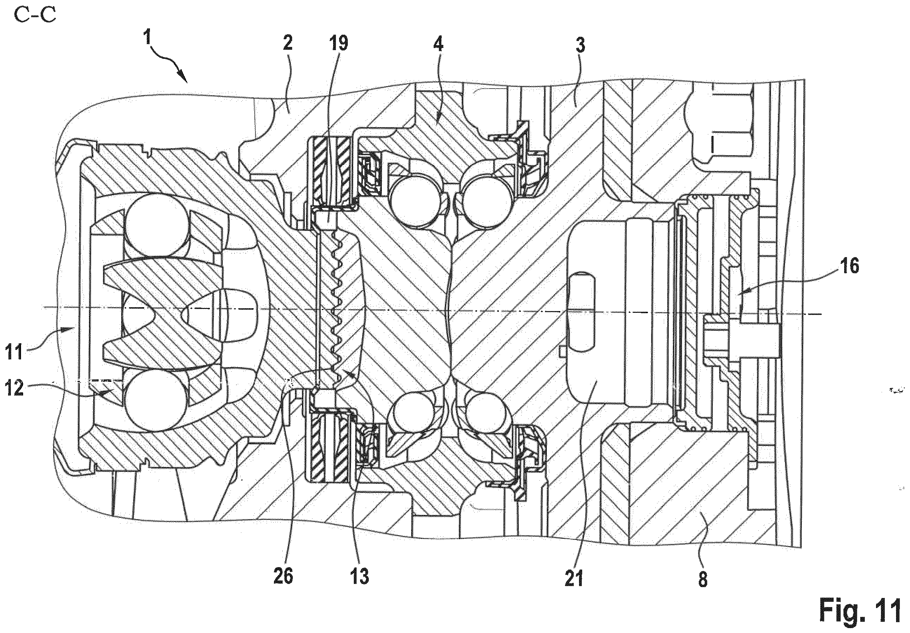

Vom nicht dargestellten Antrieb des Fahrzeuges in Richtung der Radaufhängung führt eine Abtriebswelle 11. Diese Abtriebswelle 11 umfasst die dargestellte Gelenkglocke 12. Zur Drehmomentübertragung von der Abtriebswelle 11 auf das Radlager 3 ist eine Verzahnung 13 vorgesehen. Diese Verzahnung 13 ist insbesondere in dem Schnitt C-C gemäß Figur 11 gut zu sehen. Im gezeigten Ausführungsbeispiel handelt es sich um eine Stirnradverzahnung, insbesondere Hirth-Verzahnung. Alternativ könnte hier beispielsweise auch eine Radialverzahnung oder eine Keilwellenverbindung verwendet werden.

Das Radlager 3 ist mittels einer Schraube 14 mit der Abtriebswelle 11 verspannt. Diese Schraube 14 erstreckt sich koaxial zur Abtriebswelle 11. An einer Auflagefläche 15 liegt der Kopf der Schraube 14 am Radlager 3 an.

Ferner zeigt Figur 2 eine Ventilanordnung 16 im Nabenbereich der des Rades 7. Diese Ventilanordnung 16 umfasst ein Steuerventil 17.

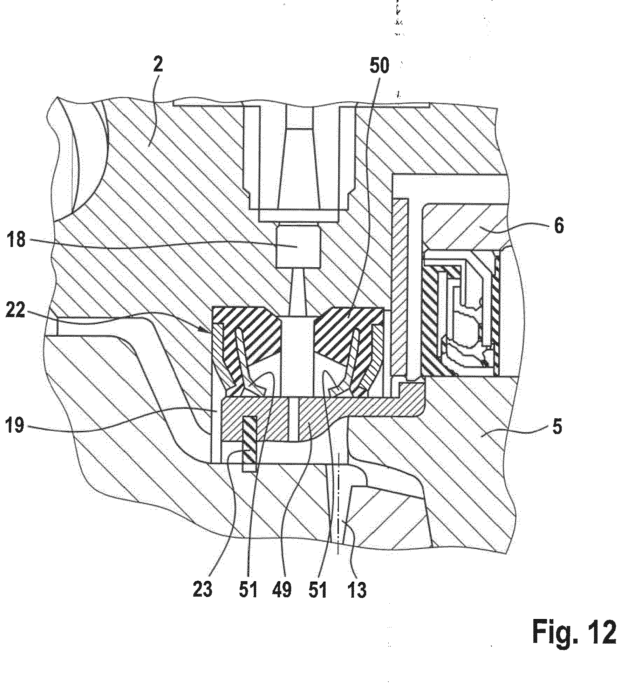

Im Folgenden wird die Druckluftversorgung des Rades 7 beschrieben: In oder am Radträger 2 ist eine Druckluftleitung 18 vorgesehen. Diese Druckluftleitung 18 führt die Druckluft von einer fahrzeugseitigen Druckluftquelle bis zu einem ersten Ringraum 19. Der erste Ringraum 19 ist zumindest begrenzt durch den Radträger 2, den Innenring 5 und die Abtriebswelle 11. Dieser erste Ringraum 19 grenzt direkt an die radiale Außenseite der Verzahnung 13. Im ersten Ringraum 19 ist eine Dichtungsanordnung 22 vorgesehen. Diese wird anhand von Figur 12 im Detail erläutert.

Durch die Freiräume 26 (s. Fig. 11) zwischen den Zähnen der Verzahnung 13 wird die Druckluft vom ersten Ringraum 19 in einen Radlagerringraum 20 (auch: zweiter Ringraum) geführt. Dieser Radlagerringraum 20 ist gebildet durch das innen hohle Radlager 3 und ist radial innen begrenzt durch die Schraube 14.

Figur 12 zeigt im Detail die Dichtungsanordnung 22 im ersten Ringraum 19. Die Dichtungsanordnung 22 dient zum Abdichten des ersten Ringraums 19 gegenüber der Umgebung. Im ersten Ringraum 19 ist ein ringförmiges Bauteil 49 angeordnet. Das ringförmige Bauteil 49 ist mit dem drehenden Anteil, vorzugsweise mit dem Innenring 5, fest verbunden. In dem ringförmigen Bauteil 49 sind mehrere Aussparungen, vorzugsweise Bohrungen, vorgesehen, um die Druckluft in radialer Richtung nach innen durchzuleiten.

Radial außerhalb des ringförmigen Bauteils 49 umfasst die Dichtungsanordnung 22 einen Elastomerblock 50. In dem Elastomerblock 50 sind zwei Dichtlippen 51 befestigt. Der Elastomerblock 50 wirkt auf die beiden Dichtlippen 51 als Feder und belastet die Dichtlippen 51, sodass sie bei entsprechend niedrigem Druck nicht am ringförmigen Bauteil 49 anliegen. Dadurch, dass sie in diesem Zustand nicht anliegen, schleifen die Dichtlippen 51 auch nicht und unterliegt somit nicht dem Verschleiß. Erst bei entsprechend großem Druck werden die Dichtlippen 51 durch den Druck bewegt und dichten dabei ab.

Der radial innerhalb des ringförmigen Bauteils 49 gelegene Bereich des ersten Ringraums 19 wird durch eine statische Dichtlippe 23 abgedichtet.

Die Druckluftführung aus dem Radlagerringraum 20 in Richtung des Rades 7 ermöglicht zumindest ein Druckluftdurchlass 24 im Bereich der Auflagefläche 15 des Schraubenkopfes. Der Druckluftdurchlass 24 ist in der Darstellung nach Figur 2 durch eine Nut 27 im Radlager 3 gebildet. Dadurch, dass hier an der Auflagefläche 15 stellenweise die Nut 27 gebildet ist, dichtet der Schraubenkopf nicht vollständig ab, sodass die Druckluft aus dem Radlagerringraum 20 weiter in Richtung eines dritten Ringraumes 21 geleitet werden kann.

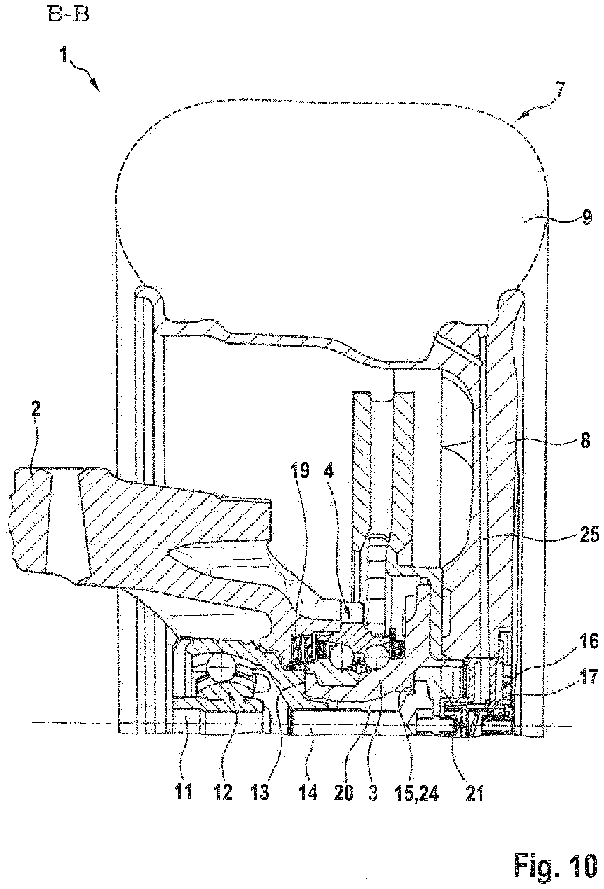

Der dritte Ringraum 21 befindet sich axial außerhalb des Schraubenkopfes der Schraube 14 und im Inneren des Radlagers 3 und/oder im Nabenbereich des Rades 7. Nach Außen, gegenüber der Umgebung, ist der dritte Ringraum 21 durch die Ventilanordnung 16 verschlossen. In der Ventilanordnung 16 ist das Steuerventil 17 vorgesehen. Die Druckluftführung führt aus dem dritten Ringraum 21 in das Steuerventil 17. Das Steuerventil 17 führt die Druckluft radial nach außen in die Speichen 8. Insbesondere zeigt der Schnitt B-B in Figur 10 die Druckluftführung vom Steuerventil 17 in den Reifen 9. Hierzu ist in zumindest einer Speiche 8 zumindest eine Felgenleitung vorgesehen. Die Felgenleitung führt vom Nabenbereich bis zur Felge und somit in den Reifen 9.

Das Steuerventil 17 umfasst einen federbelasteten Kolben. Bei einem ersten Druck über die beschriebene Druckluftführung bewegt sich der Kolben und ermöglicht eine Befüllung des Reifens 9. Bei einem zweiten Druck, der höher liegt als der erste Druck, bewegt sich der Kolben weiter gegen die Federkraft und ermöglicht dabei ein Ablassen des Drucks aus dem Reifen 9 in die Umgebung. Das Steuerventil 17 ist somit pneumatisch steuerbar. Es bedarf keiner stromversorgenden Leitungen vom Fahrzeug bis zum Steuerventil 17.

Die Figuren 3 bis 9 zeigen jeweils einen Ausschnitt aus Figur 2, mit jeweils anderer Ausgestaltung des Druckluftdurchlasses 24. Diese unterschiedlichen Ausgestaltungen des Druckluftdurchlasses 24 können alle miteinander kombiniert werden. So ist es möglich, dass im Bereich einer Auflagefläche 15 unterschiedliche Druckluftdurchlässe 24 ausgebildet sind.

Gemäß Figur 3 befindet sich in der der Auflagefläche zugewandten Seite des Schraubenkopfes eine Nut 27, die den Druckluftdurchlass 24 bildet.

Gemäß Figur 4 ist im Radlager 3 ein kurzer Kanal 28 vorgesehen. Dieser Kanal 28 führt unter Umgehung der Auflagefläche 15 vom Radlagerringraum 20 in den dritten Ringraum 21.

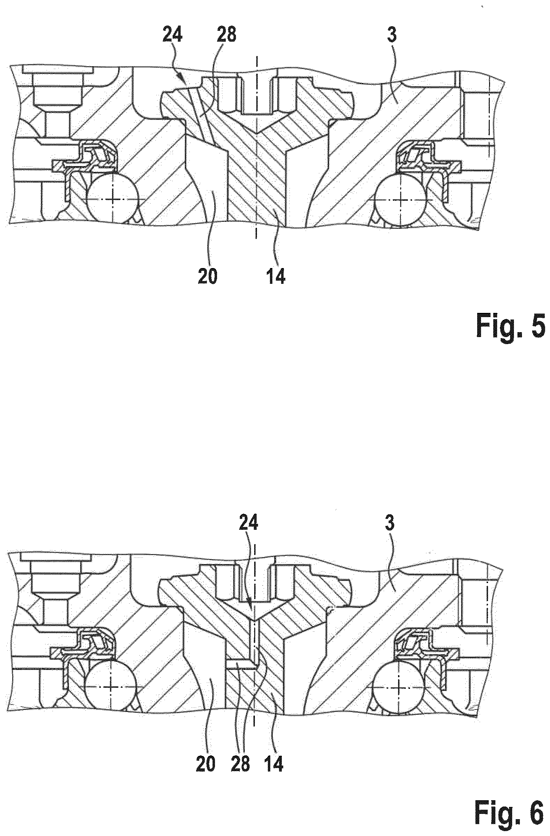

Gemäß Figur 5 führt ein kurzer Kanal 28 in gerade Ausführung durch den Schraubenkopf.

Figur 6 zeigt eine weitere Ausbildung des Kanals 28 in der Schraube 14. Dabei führt ein erster radial gerichteter Kanal 28 vom Radlagerringraum 20 bis zur Längsachse der Schraube 14. An der Längsachse der Schraube 14 führt ein zweiter Kanal 28 bis zur Mitte des Schraubenkopfes und somit in den dritten Ringraum 21. Der Schraubenkopf weist beispielhaft einen Innensechskant auf. Der Kanal 28 in Figur 6 mündet in diesem Innensechskant.

Die in Figuren 4, 5 und 6 gezeigten Kanäle sind möglichst kurz ausgebildet und umgehen lediglich die Auflagefläche 15. Dabei können die Kanäle in einfachster Form als Bohrungen ausgeführt werden. Alternativ können bei Gussteilen auch entsprechende Röhrchen eingelegt werden.

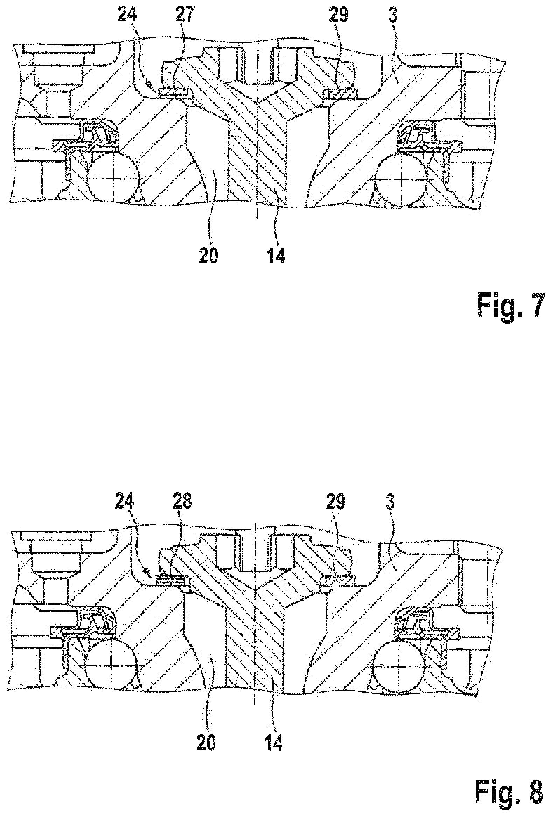

Gemäß Figur 7 wird an der Auflagefläche 15 eine Unterlegscheibe 29 verwendet. In dieser Unterlegscheibe 29 wiederum ist eine Nut 27 vorgesehen, die den Druckluftdurchlass 24 bildet.

Gemäß Figur 8 kann in der Unterlegscheibe 29 auch ein Kanal 28 als Druckluftdurchlass 24 ausgebildet werden.

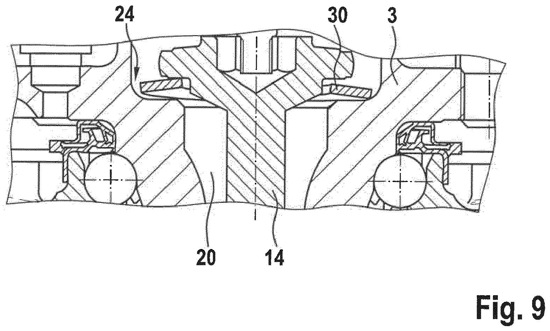

Figur 9 zeigt die Verwendung eines Federrings 30 an der Auflagefläche 15. Die entsprechende Wellenform des Federrings 30 bietet ausreichend Freiraum, der als Druckluftdurchlass 24 nutzbar ist.

Zusätzlich oder alternativ zu der Ausbildung des Druckluftdurchlasses 24 in Form von Nuten 27 oder Kanälen 28 ist auch vorgesehen, ein luftdurchlässiges Material im entsprechenden Bereich des Radlagers 3, der Schraube 14, der Unterlegscheibe 29 oder des Federrings 30 zu verwenden. Das luftdurchlässige Material ist insbesondere poröses Material, beispielsweise Sintermetall, Metallschaum oder poröser PTFE-Schaum.

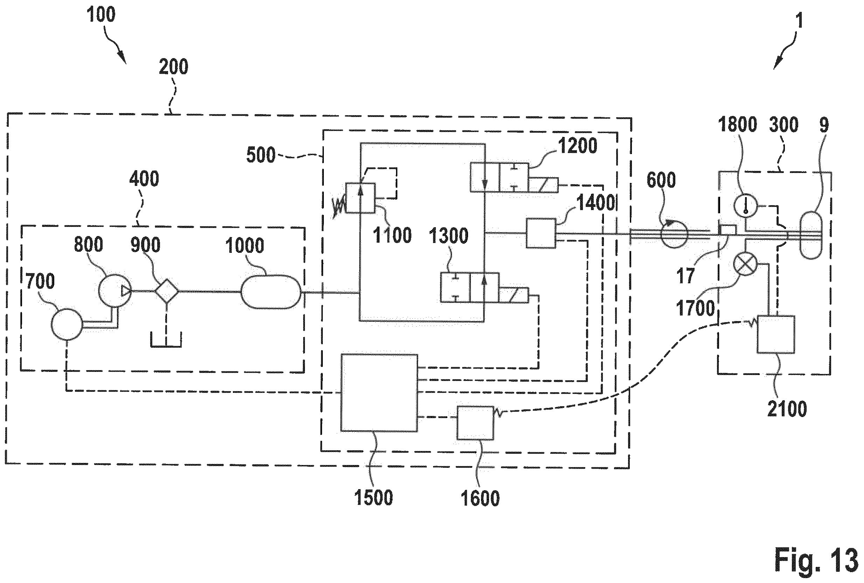

Figur 13 zeigt eine schematische Ansicht einer Anordnung 100 zur Reifenfülldruckregelung eines Fahrzeuges. Die Anordnung 100 wird zur Durchführung des Verfahrens zur Reifenfülldruckregelung des Fahrzeuges verwendet. Die Konstruktive Ausgestaltung der Anordnung 100 entspricht den Darstellungen in den Figuren 1 bis 12.

Figur 13 zeigt die Anordnung 100, die sich grundsätzlich unterteilt in einen nicht-drehenden Anteil 200 und einen drehenden Anteil 300. Der nicht-drehenden Anteil 200 ist im Fahrzeug, beispielsweise innerhalb der Karosserie angeordnet. Vom drehenden Anteil 300 ist im Detail der Reifen 9 gezeigt. Ferner umfasst dieser drehende Anteil 300 das Rad 7 auf dem der Reifen 9 montiert ist, sowie das Radlager 3 , auf dem das Rad 7 montiert ist.

Im nicht-drehenden Anteil 200 befindet sich eine Druckluftquelle 400 sowie eine Steuereinheit 500. Über eine Drehdurchführung 600 führt die Druckluftführung vom nicht-drehenden Anteil 200 in den drehenden Anteil 300, insbesondere bis in den Reifen 9. Die Drehdurchführung 600 würde vorab beispielhaft durch die Verzahnung 13 beschrieben.

Die Druckluftquelle 400 umfasst einen Motor 700. Dies kann ein separater Elektromotor sein. Alternativ kann hier auch das Antriebsaggregat des Fahrzeuges verwendet werden. Über den Motor 700 wird ein Kompressor 800 angetrieben. Der Kompressor 800 verdichtet Luft und leitet diese in einen Druckspeicher 1000 ein. Zwischen dem Kompressor 800 und dem Druckspeicher 1000 befindet sich eine Luftaufbereitung 900 zur Lufttrocknung.

Die Steuereinheit 500 umfasst zwei parallel geschaltete Magnetventile 1200, 1300. Dem ersten Magnetventil 1200 ist ein Druckminderer 1100 vorgeschaltet. Die Magnetventile 1200, 1300 sind hier als Sperrventile ausgestaltet, die entweder offen oder geschlossen sein können. Aufgrund des Druckminderers 1100 kann das erste Magnetventil 1200 einen ersten, niedrigeren Druck freigeben. Am zweiten Magnetventil 1300 liegt ein zweiter höherer Druck an. Die Druckluftführung führt nach den Magnetventilen 1200, 1300 zu einem Verteilerblock 1400. Über diesen Verteilerblock 1400 führt die Druckluftführung zu den einzelnen Reifen 9 des Fahrzeuges. Der Einfachheit halber ist hier lediglich ein Reifen 9 dargestellt.

Die Steuereinheit 500 umfasst eine Signalverarbeitung 1500 und einen Funkempfänger 1600. Die Signalverarbeitung 1500 steuert die beiden Magnetventile 1200, 1300 an. Vorzugsweise steuert die Signalverarbeitung 1500 auch den Verteilerblock 1400 sowie wie den Motor 700 an. Entscheidend ist, dass die Signalverarbeitung 1500 durch die Ansteuerung der beiden Magnetventile 1200, 1300 zumindest zwei unterschiedliche Drücke über die Druckluftführung in den drehenden Anteil 300 weiterleiten kann.

Im drehenden Anteil 300 in der Druckluftführung befindet sich das Steuerventil 17. Dieses Steuerventil 17 ermöglicht zumindest zwei Schaltstellungen. In der ersten Schaltstellung kann der Reifen 9 befüllt werden. In der zweiten Schaltstellung kann Druckluft aus dem Reifen 9 abgelassen werden.

Ferner sind im drehenden Anteil ein Drucksensor 1700 und ein Temperatursensor 1800 vorgesehen. Der Drucksensor 1700 misst den Ist-Druck im Reifen 9. Der Temperatursensor 1800 misst die Temperatur im oder am Reifen 9.

Ein Funksender 2100 des drehenden Anteils 300 überträgt drahtlos den Ist-Druck und die gemessenen Temperaturen den Funkempfänger 1600 der Steuereinheit 500. Die drahtlose Übertragung erfolgt über elektromagnetische Wellen, Licht oder Schall.

Gemäß Figuren 2 umfasst das Steuerventil 17 einen linear beweglichen Ventilkörper 3000, vorzugsweise ausgebildet als Kolben. Dieser Ventilkörper 3000 ist durch eine Feder 3100 belastet. Durch linear verschieben des Ventilkörpers 3000 können die beiden Schaltstellungen zum Befüllen des Reifens 9 und zum Ablassen der Druckluft erreicht werden. Der Ventilkörper 3000 ist dabei durch den Druck in der Druckluftführung entgegen der Federkraft bewegbar.

Figur 10 zeigt im Detail mit dem Schnitt B-B eine Felgenleitung 25, die innerhalb des Rades 7 vom Nabenbereich durch die Speiche hindurch bis in die Felge und somit in den Reifen 9 führt. Über diese Felgenleitung 25 kann Druckluft in den Reifen 9 eingeleitet und aus dem Reifen 9 abgelassen werden.

Figur 13 zeigt die Möglichkeit, das Steuerventil 19 lediglich über den pneumatischen Druck anzusteuern. Es bedarf also keiner zusätzlichen Leitungen vom nicht-drehenden Anteil 200 in den drehenden Anteil 300. Um den Ist-Druck im Reifen 9 an den gewünschten Soll-Druck anzupassen, bedarf es des Drucksensors 1700 und einer entsprechenden Rückführung der gemessenen Daten. Hierzu wird die drahtlose Datenübertragung genutzt. Dadurch bedarf es auch für diese Übertragung keiner zusätzlichen Kabel zwischen dem drehenden Anteil 300 und dem nicht-drehenden Anteil 200. Mit dem Drucksensor 1700 und dem Temperatursensor 1800 im drehenden Anteil können die entsprechenden Werte sehr nahe am Reifen 9 oder im Reifen 9 gemessen werden.

### Bezugszeichenliste:

- 1: Anordnung
- 2: Radträger (Schwenklager)
- 3: Radlager
- 4: Wälzlager
- 5: Innenring
- 6: Außenring
- 7: Rad
- 8: Speichen
- 9: Reifen
- 10: Radschraube
- 11: Abtriebswelle
- 12: Gelenkglocke
- 13: Verzahnung
- 14: Schraube
- 15: Anlagefläche
- 16: Ventilanordnung
- 17: Steuerventil
- 18: Druckluftleitung
- 19: erster Ringraum
- 20: Radlagerringraum (zweiter Ringraum)
- 21: dritter Ringraum
- 22: Dichtung
- 24: Druckluftdurchlass
- 25: Felgenleitung
- 26: Freiräume
- 27: Nut
- 28: Kanal/Bohrung
- 29: Unterlegscheibe
- 30: Federring
- 49: ringförmiges Bauteil
- 50: Elastomerblock
- 51: Dichtlippen
- 100: Anordnung
- 200: nicht-drehender Anteil
- 300: drehender Anteil
- 400: Druckluftquelle
- 500: Steuereinheit
- 600: Drehdurchführung
- 700: Motor
- 800: Kompressor
- 900: Luftaufbereitung
- 1000: Druckspeicher
- 1100: Druckminderer
- 1200: erstes Magnetventil
- 1300: zweites Magnetventil
- 1400: Verteilerblock
- 1500: Signalverarbeitung
- 1600: Funkempfänger
- 1700: Drucksensor
- 1800: Temperatursensor
- 2100: Funksender
- 3000: Ventilkörper
- 3100: Feder

## Patentansprüche

1. Anordnung (1) zur Druckluftversorgung eines Rades (7) eines Fahrzeuges, umfassend:
• ein Rad (7) mit Reifen (9), eine Abtriebswelle (11) zur Drehmomentübertragung auf das Rad (7),
• einen am Fahrzeug befestigbaren Radträger (2), ein Radlager (3) an dem das Rad (7) drehfest montiert ist, wobei das Radlager (3) drehbar am Radträger (2) montiert ist,
• eine Verzahnung (13) zwischen Abtriebswelle (11) und Radlager (3), wobei die Verzahnung nicht als Keilwellenverbindung ausgestaltet ist und
• eine Druckluftführung, die von einer fahrzeugseitigen Druckluftquelle durch Freiräume (26) zwischen Zähnen der Verzahnung (13), von der Verzahnung (13) zum Rad (7) und vom Rad (7) in den Reifen (9) führt.

2. Anordnung nach Anspruch 1, wobei die Druckluftführung von der fahrzeugseitigen Druckluftquelle zu einem ersten Ringraum (19), vom ersten Ringraum (19) durch die Freiräume (26) zwischen den Zähnen der Verzahnung (13), von der Verzahnung (13) in einen zweiten Ringraum (20), vom zweiten Ringraum (20) zum Rad (7) führt.

3. Anordnung nach Anspruch 2, umfassen eine Druckluftleitung (18) im und/oder am Radträger (2), die von der Druckluftquelle zum ersten Ringraum (19) führt.

4. Anordnung nach einem der Ansprüche 2 oder 3, wobei der erste Ringraum (19) durch zumindest einen nicht-drehenden Anteil der Anordnung (1), insbesondere den Radträger (2), und zumindest einen drehenden Anteil der Anordnung (1), insbesondere Abtriebswelle (11) und/oder Radlager (3), gebildet ist, wobei der erste Ringraum (19) mittels einer Dichtungsanordnung (22) gegenüber der Umgebung abgedichtet ist.

5. Anordnung nach Anspruch 4, wobei die Dichtungsanordnung (22) zumindest eine Dichtlippe (51) umfasst, wobei die Dichtlippe (51) bei entsprechend niedrigem Druck im ersten Ringraum (19) nicht abdichtet und nicht schleift, und wobei durch entsprechend hohen Druck die Dichtlippe (51) bewegbar ist und somit abdichtet.

6. Anordnung nach einem der Ansprüche 2 bis 5, wobei das Radlager (3) mittels einer Schraube (14) mit der Abtriebswelle (11) verspannt ist, wobei die Schraube (14) koaxial zur Abtriebswelle (11) angeordnet ist, und wobei der zweite Ringraum (20) im Inneren des Radlagers (3) und radial außerhalb der Schraube (14) definiert ist.

7. Anordnung nach Anspruch 6, umfassend eine Auflagefläche (15) am Radlager (3), an der die Schraube (14) aufliegt, und zumindest einen Druckluftdurchlass (24) im Bereich der Auflagefläche (15), wobei der Druckluftdurchlass (24) vom zweiten Ringraum (20) in einen dritten Ringraum (21) führt.

8. Anordnung nach einem der vorhergehenden Ansprüche, umfassend ein Steuerventil (17) in der Druckluftführung zwischen Druckquelle und Reifen (9).

9. Anordnung nach Anspruch 8, wobei das Steuerventil (17) zwischen dem dritten Ringraum (21) und dem Reifen (9), vorzugsweise im Nabenbereich des Rades (7) oder im Radlager (3) angeordnet ist.

10. Verfahren zur Druckluftversorgung eines Rades (7) eines Fahrzeuges, wobei die Druckluft von einer fahrzeugseitigen Druckquelle durch Freiräume (26) zwischen Zähnen einer Verzahnung (13) bis zum Rad (7) geführt wird, wobei die Verzahnung (13) zur Drehmomentübertragung vom Antrieb des Fahrzeuges auf das Rad (7) verwendet wird, wobei die Verzahnung nicht als Keilwellenverbindung ausgestaltet ist.

## Claims

1. Assembly (1) for the compressed air supply of a wheel (7) of a vehicle, comprising:
- a wheel (7) with a tyre (9), an output shaft (11) for transmitting torque to the wheel (7),
- a wheel carrier (2) which can be fastened on the vehicle, a wheel bearing (3), on which the wheel (7) is mounted in a rotationally fixed manner, the wheel bearing (3) being mounted rotatably with respect to the wheel carrier (2),
- a toothing system (13) between the output shaft (11) and the wheel bearing (3), the toothing system not being configured as a splined shaft connection, and
- a compressed-air guide, which leads from a vehicle-side compressed-air source through clearances (26) between teeth of the toothing system (13), from the toothing system (13) to the wheel (7), and from the wheel (7) into the tyre (9) .

2. Assembly according to Claim 1, wherein the compressed-air guide leads from the vehicle-side compressed-air source to a first annular space (19), from the first annular space (19) through the clearances (26) between the teeth of the toothing system (13), from the toothing system (13) into a second annular space (20), from the second annular space (20) to the wheel (7).

3. Assembly according to Claim 2, comprising a compressed-air line (18) in and/or on the wheel carrier (2), the compressed-air line leading from the compressed-air source to the first annular space (19) .

4. Assembly according to either of Claims 2 or 3, wherein the first annular space (19) is formed by at least one non-rotating portion of the assembly (1), in particular the wheel carrier (2), and at least one rotating portion of the assembly (1), in particular the output shaft (11) and/or the wheel bearing (3), wherein the first annular space (19) is sealed off with respect to the surroundings by means of a sealing assembly (22).

5. Assembly according to Claim 4, wherein the sealing assembly (22) comprises at least one sealing lip (51), wherein the sealing lip (51) does not provide a seal and does not abrade in the case of a correspondingly low pressure in the first annular space (19), and wherein the sealing lip (51) is movable and thus provides a seal by virtue of a correspondingly high pressure.

6. Assembly according to one of Claims 2 to 5, wherein the wheel bearing (3) is braced to the output shaft (11) by means of a bolt (14), wherein the bolt (14) is arranged coaxially to the output shaft (11), and wherein the second annular space (20) is defined in the interior of the wheel bearing (3) and radially outside the bolt (14).

7. Assembly according to Claim 6, comprising a contact surface (15) on the wheel bearing (3), against which contact surface the bolt (14) bears, and at least one compressed-air passage (24) in the region of the contact surface (15), the compressed-air passage (24) leading from the second annular space (20) into a third annular space (21).

8. Assembly according to one of the preceding claims, comprising a control valve (17) in the compressed-air guide between pressure source and tyre (9).

9. Assembly according to Claim 8, wherein the control valve (17) is arranged between the third annular space (21) and the tyre (9), preferably in the hub region of the wheel (7) or in the wheel bearing (3).

10. Method for the compressed air supply of a wheel (7) of a vehicle, wherein the compressed air is led from a vehicle-side pressure source through clearances (26) between teeth of a toothing system (13) as far as the wheel (7), wherein the toothing system (13) is used for transmitting torque from the drive of the vehicle to the wheel (7), the toothing system not being configured as a splined shaft connection.

## Revendications

1. Dispositif (1) d'alimentation en air comprimé d'une roue (7) d'un véhicule, comprenant :
• une roue (7) dotée de pneus (9), un arbre de sortie (11) servant à la transmission de couple à la roue (7),
• un support de roue (2) pouvant être fixé au véhicule, un palier de roue (3) sur lequel la roue (7) est montée de manière solidaire en rotation, le palier de roue (3) étant monté rotatif sur le support de roue (2),
• une denture (13) entre l'arbre de sortie (11) et le palier de roue (3), la denture n'étant pas configurée sous forme d'accouplement à cannelures et
• un guidage d'air comprimé qui conduit à partir d'une source d'air comprimé côté véhicule à travers des espaces libres (26) entre des dents de la denture (13), de la denture (13) à la roue (7) et de la roue (7) dans le pneu (9) .

2. Dispositif selon la revendications 1, dans lequel le guidage d'air comprimé conduit à partir de la source d'air comprimé côté véhicule à un premier espace annulaire (19), à partir du premier espace annulaire (19) à travers les espaces libres (26) entre les dents de la denture (13), à partir de la denture (13) dans un deuxième espace annulaire (20), à partir du deuxième espace annulaire (20) jusqu'à la roue (7).

3. Dispositif selon la revendication 2, comprenant une conduite d'air comprimé (18) dans et/ou sur le support de roue (2), qui conduit de la source d'air comprimé au premier espace annulaire (19).

4. Dispositif selon l'une des revendications 2 ou 3, dans lequel le premier espace annulaire (19) est formé par au moins une partie non rotative du dispositif (1), en particulier le support de roue (2), et par au moins une partie rotative du dispositif (1), en particulier l'arbre de sortie (11) et/ou le palier de roue (3), le premier espace annulaire (19) étant rendu étanche vis-à-vis de l'environnement au moyen d'un dispositif d'étanchéité (22).

5. Dispositif selon la revendication 4, dans lequel le dispositif d'étanchéité (22) comprend au moins une lèvre d'étanchéité (51), en présence d'une pression faible correspondante dans le premier espace annulaire (19), la lèvre d'étanchéité (51) n'assurant pas l'étanchéité, et ne frottant pas, et, en présence d'une haute pression correspondante, la lèvre d'étanchéité (51) étant mobile et assurant ainsi l'étanchéité.

6. Dispositif selon l'une des revendications 2 à 5, dans lequel le palier de roue (3) est serré sur l'arbre de sortie (11) au moyen d'une vis (14), la vis (14) étant disposée coaxialement à l'arbre de sortie (11), et le deuxième espace annulaire (20) étant défini à l'intérieur du palier de roue (3) et radialement à l'extérieur de la vis (14).

7. Dispositif selon la revendication 6, comprenant une surface d'appui (15) sur le palier de roue (3), surface sur laquelle s'appuie la vis (14), et au moins un passage d'air comprimé (24) dans la région de la surface d'appui (15), le passage d'air comprimé (24) conduisant du deuxième espace annulaire (20) à un troisième espace annulaire (21).

8. Dispositif selon l'une des revendications précédentes, comprenant une soupape de commande (17) dans le guidage d'air comprimé entre la source de pression et le pneu (9).

9. Dispositif selon la revendication 8, dans lequel la soupape de commande (17) est disposée entre le troisième espace annulaire (21) et le pneu (9), de préférence dans la région de moyeu de la roue (7) ou dans le palier de roue (3).

10. Procédé d'alimentation en air comprimé d'une roue (7) d'un véhicule, dans lequel l'air comprimé est conduit à partir d'une source de pression côté véhicule à travers des espaces libres (26) entre des dents d'une denture (13) jusqu'à la roue (7), la denture (13) étant utilisée pour la transmission de couple de l'entraînement du véhicule à la roue (7), la denture n'étant pas configurée sous forme d'accouplement à cannelures.
